# EUROPEAN PATENT APPLICATION

(11) **EP 3 040 265 A1**
(43) Date of publication of application: **06.07.2016**
(21) Application number: 15150013.9
(22) Date of filing: 02.01.2015
(51) Int. Cl.: B64C 1/06, B64F 5/00

(54) **Method for joining two fuselage sections and mounting device**

(71) Applicant: Airbus Operations GmbH, 21129 Hamburg (DE)
(72) Inventor: Eilken, Wolfgang, 21129 Hamburg (DE); Sauer, Michael, 21129 Hamburg (DE); Tiryaki, Memis, 21129 Hamburg (DE)
(74) Representative: Isarpatent

(57) **Abstract**

A method (M) for joining two fuselage sections (FS1, FS2) of aircraft or spacecraft involves fastening (M1) a crossbeam (CB) to an elliptical interface frame (IF) to form an intermediate coupling assembly; temporarily fastening (M2) the intermediate coupling assembly to a planar mounting frame (MF) at a number of fixation holes (H) formed in the planar mounting frame (MF); temporarily fastening (M3) a buttstrap (BS) circumferentially around the interface frame (IF); permanently attaching (M4) the intermediate coupling assembly and the buttstrap (BS) to a first fuselage section (FS1); disengaging (M5) the intermediate coupling assembly from the mounting frame (MF); and permanently attaching (M6) a second fuselage section (FS2) to the first fuselage section (FS1) at the buttstrap (BS); a mounting device comprising a planar mounting frame (MF) and at least one mounting beam (MB; MB') extending substantially perpendicularly to the plane of extension of the mounting frame (MF) is also disclosed.

## Description

The present invention pertains to a method for joining two fuselage sections of aircraft or spacecraft and a mounting device configured to aid the joining of two fuselage sections of an aircraft or spacecraft.

Although applicable to any kind of aircraft or spacecraft or the like, the present invention and the problem on which it is based will be explained in greater detail with reference to fuselage shells of commercial aircraft.

A fuselage shell of a modern airplane consists of a rigid framework of stiffening elements that is covered by a metal or composite skin. The framework normally comprises a series of frames bent into a circumferential direction according to the shape of the fuselage cross section and a plurality of longitudinal stringers that are joined to the frames. A typical fuselage is divided in the longitudinal direction into fuselage sections, each of which being manufactured separately. When assembling the final fuselage of the aircraft, typically three or more of such fuselage sections need to be joined to form the complete fuselage shell. To form the complete fuselage airframe of the aircraft, a plurality of prefabricated fuselage sections are aligned in tandem and finally joined together, for example by riveting.

In modern aircraft construction, section-wise construction is commonly employed. The fuselage sections, particularly barrel-shaped sections, are prefabricated and then placed side by side and connected to one another in a so-called final assembly line (FAL). The fuselage sections may for example be manufactured using high-tensile aluminium alloy materials. Alternatively, fuselage sections may also be manufactured from fibre compound materials, such as carbon fibre reinforced epoxy resins.

The end regions of the fuselage sections are prefabricated with overlapping skin or shell portions that need to be precisely aligned to each other during the final assembly. In particular, the cross-sections of adjoining fuselage sections to be joined are subject to deviations in tolerance due to the manufacturing processes. In order to compensate for the tolerances between the fuselage sections being joined, either hardening fluid or solid spacers (so-called "shims") may be employed. The use of shims, however, incurs excess weight and considerably increases the costs of assembly. During assembly the cross-sectional geometries of the fuselage sections are first precisely measured and the fuselage sections are then aligned relative to one another using the measurement data. Shims are inserted into the gaps between the fuselage sections and hardened, if applicable. When using solid shims, a number of shims with different shapes and sizes have to be kept in store so that the assembly efficiency is further diminished.

The document WO 2011/009983 A1 discloses the manufacture of fuselage sections with either an assembly structure readily integrated into the fuselage section or a coupling portion separated from a main portion of the fuselage section. Such corresponding fuselage sections may be subsequently assembled in an easier manner.

The document US 2013/0292514 A1 discloses a fuselage assembly with first and second barrel sections to be coupled and a member maintaining a coupling between the first barrel section and the second barrel section, which member induces a compressive force to one of the first and second barrel sections.

It is one object of the present invention to provide solutions for a more efficient way of assembling fuselage sections that increase the joining precision and dispose with the need for inefficient and expensive shimming.

This object is solved by a method for joining two fuselage sections of an aircraft or spacecraft. Additionally, the object is solved by a mounting device which is configured to aid the joining of two fuselage sections of an aircraft or spacecraft.

According to a first aspect of the invention, a method for joining two fuselage sections comprises fastening a crossbeam to an elliptical interface frame to form an intermediate coupling assembly; temporarily fastening the intermediate coupling assembly to a planar mounting frame at a number of fixation holes formed in the planar mounting frame; temporarily fastening a buttstrap circumferentially around the interface frame; permanently attaching the intermediate coupling assembly and the buttstrap to a first fuselage section; disengaging the intermediate coupling assembly from the mounting frame; and permanently attaching a second fuselage section to the first fuselage section at the buttstrap.

According to a second aspect of the invention, a mounting device may be used to aid in performing the method according to the first aspect of invention. The mounting device is used for mounting an interface frame to a fuselage section. The mounting device according to the second aspect of the invention comprises a planar mounting frame having a number of fixation holes formed therein, the mounting frame configured to be attached to an interface frame and a crossbeam of an intermediate coupling assembly, and at least one mounting beam extending substantially perpendicularly to the plane of extension of the mounting frame, the at least one mounting beam comprising a plurality of mounting beam attachment structures for attaching the mounting device to a mounting attachment beam of the fuselage section.

The basic idea of the invention is to pre-assemble an intermediate coupling assembly including an interface frame, a buttstrap and a crossbeam. The intermediate coupling assembly may be mounted to a mounting device and preliminarily held together with temporary fasteners such as tack rivets. The mounting device is then used to move the intermediate coupling assembly towards a first one of the fuselage sections to be joined. While being held in place by the mounting device, the intermediate coupling assembly is joined to an end section of the first one of the fuselage sections. After this first assembly stage, the mounting device may be removed. In a second assembly stage, the first one of the fuselage sections is moved towards a second one of the fuselage sections to be joined so that the intermediate coupling assembly closely matches the second one of the fuselage sections.

In that manner, each of the stages may be performed with utmost precision: During pre-assembly of the intermediate coupling assembly the buttstrap and thus the outer contour of the intermediate coupling assembly may be kept within close tolerance with the first one of the fuselage sections. Therefore, when joining the intermediate coupling assembly to the first one of the fuselage sections, it will not be necessary to compensate for any tolerance deviations between the first one of the fuselage sections and the intermediate coupling assembly. Similarly, with the intermediate coupling assembly being firmly and precisely joined to the first one of the fuselage sections, the second one of the fuselage sections will be within close tolerance with first one of the fuselage sections as well, obviating the need for shimming in that final assembly stage, too.

Moreover, one important advantage of the invention is that longitudinal seams of the first fuselage section at the transverse joint with the intermediate coupling assembly may be completely riveted through in a fixed geometry. While the riveting of the longitudinal seams in the first fuselage section may still be out of tolerance at some points, the second fuselage section to be joined to the first fuselage section will only need to correspond to the pre-manufactured intermediate coupling assembly at the transverse joint. This means that due to the precise calibration and pre-manufacturing of the intermediate coupling assembly the geometry at the transverse joint will be within close tolerance. Thus, when completely riveting through the longitudinal seams of the second fuselage section at the transverse joint, such riveting does not need to factor in any misalignments of the riveting of the longitudinal seams at the first fuselage section.

Advantageous embodiments and improvements of the present invention are found in the subordinate claims.

According to an embodiment of the method, the interface frame may comprise an outer frame member having a fastening flange for fastening the buttstrap.

According to another embodiment of the method, the method may further comprise temporarily fastening the mounting frame to a mounting attachment beam of the first fuselage section.

According to yet another embodiment of the method, the mounting attachment beam of the fuselage section may comprise a seat rail of a floor grid in the first fuselage section.

According to another embodiment of the method, temporarily fastening the buttstrap may comprise tack riveting the buttstrap circumferentially around the interface frame.

According to a further embodiment of the method, permanently attaching the intermediate coupling assembly and the buttstrap to the first fuselage section may comprise riveting the buttstrap to an inner wall of the shell of the first fuselage section. In this regard, permanently attaching the second fuselage section to the first fuselage section may comprise, in another embodiment, riveting the buttstrap to an inner wall of the shell of the second fuselage section.

According to a further embodiment of the method, after permanently attaching the intermediate coupling assembly and the buttstrap to the first fuselage section, longitudinal seams in the first fuselage section may be completely riveted through.

According to an embodiment of the mounting device, the planar mounting frame may comprise a rectangular or elliptical framework structure, and the at least one mounting beam may be attached to the rectangular or elliptical framework structure.

According to an embodiment of the mounting device, the mounting device may further comprise a mounting device carrier releasably coupled to the planar mounting frame, the mounting device carrier having mobility conferring equipment configured to move the mounting device carrier with the planar mounting frame and the at least one mounting beam substantially suspended in air.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
Fig. 1 schematically illustrates a front view of a mounting device with an intermediate coupling assembly attached thereto according to an embodiment of the invention.
Fig. 2 schematically illustrates a cross-sectional view of a detail in Fig. 1 along the section line A-A'.
Fig. 3 schematically illustrates a first assembly stage in a method for joining fuselage sections according to a further embodiment of the invention.
Fig. 4 schematically illustrates a front view of a mounting device with an intermediate coupling assembly attached thereto when being joined to a fuselage section according to another embodiment of the invention.
Fig. 5 schematically illustrates a second assembly stage in a method for joining fuselage sections according to a further embodiment of the invention.
Fig. 6 schematically illustrates a method for joining two fuselage sections of aircraft or spacecraft according to a further embodiment of the invention.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

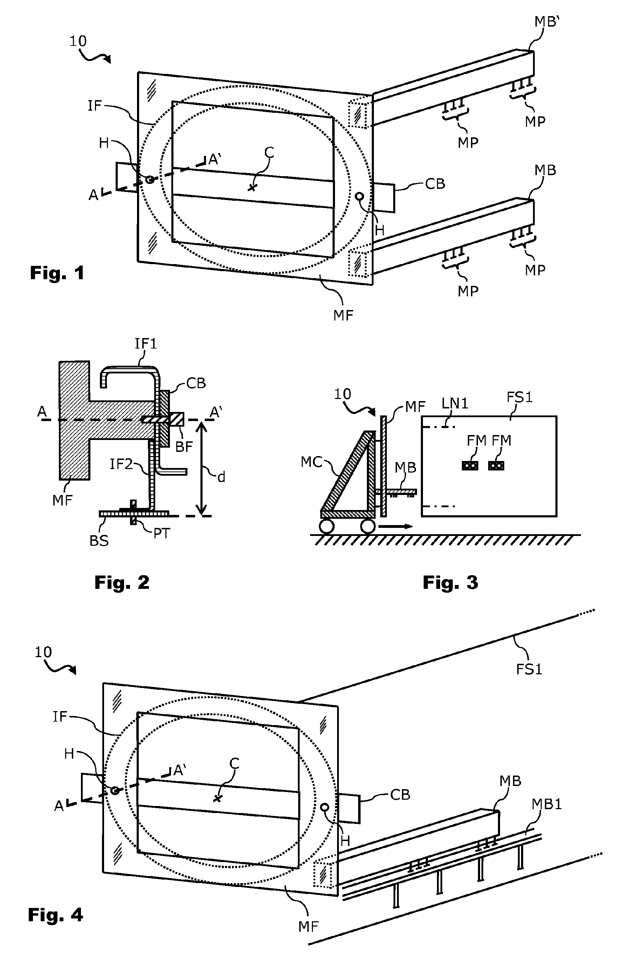

Fig. 1 shows a front view of a mounting device 10. The mounting device 10 is depicted with an intermediate coupling assembly attached thereto. The mounting device 10 is designed to aid in mounting an interface frame IF to a fuselage section. The mounting device 10 comprises a planar mounting frame MF. The planar mounting frame MF may for example comprise a rectangular framework structure, as shown in Fig. 1. The rectangular framework structure includes a generally planar and rigid strip of material of fixed width that runs around a hollow or clearance arranged around the center point C of the mounting frame MF. It may of course also be possible to employ an elliptical, or specifically circular, framework structure.

The mounting frame MF has a number of fixation holes H formed therein, for example two at opposing edges of the rectangular framework structure as illustrated in Fig. 2. The mounting frame MF is configured to be attached to an interface frame IF and a crossbeam CB of an intermediate coupling assembly which attachment geometry or arrangement will be described further below in conjunction with Fig. 2 which illustrates a cross-sectional view of a detail along the section line A-A' indicated in Fig. 1.

The mounting frame MF additionally comprises one or more mounting beams MB and MB' which extend substantially perpendicularly to the plane of extension of the mounting frame MF. The mounting beams MB, MB' may be attached to the rectangular or elliptical framework structure as illustrated in Fig. 2. The position of attachment to the mounting frame MF may be chosen freely according to the respective position of corresponding mounting attachment beams in the fuselage section to which the interface frame IF and the crossbeam CB should be joined as intermediate coupling assembly. The number of mounting beams MB, MB' may not be limited to two as shown in Fig. 2, but any other number of mounting beams MB, MB' may be employed as well, depending on desired stability of the attachment of the mounting frame MF to the fuselage section.

Each of the mounting beams MB, MB' may have a plurality of mounting beam attachment structures MP that are used to securely and releasably attach the mounting device 10 to a mounting attachment beam of the fuselage section. The mounting beam attachment structures MP may for example comprise multiple rows of pegs or pins that correspond to respective attachment holes or receptacles in a mounting attachment beam of the fuselage section to be joined with.

Fig. 2 schematically illustrates the cross-sectional view of Fig. 1 along the section line A-A'. The mounting frame MF may have protrusions extending from the back of the mounting frame MF in order to accommodate flange portions IF1 of the interface frame IF to be mounted thereupon. The crossbeam CB and the interface frame IF are temporarily fastened to the mounting frame MF by means of temporary fasteners, such as fixation bolts BF which are introduced through holes in the crossbeam CB and the interface frame IF into the fixation holes H.

The interface frame IF may have an outer frame member IF2 which has a fastening flange for temporarily fastening the buttstrap BS thereto. The buttstrap BS may be fastened circumferentially around the interface frame IF at that flange portion to that a distance d between the fixation hole H and the buttstrap BS is kept within very close tolerance. The buttstrap BS may for example be tack riveted circumferentially around the fastening flange of the outer frame member IF2 by means of preliminary tacks PT as exemplarily shown in Fig. 2.

Fig. 3 shows a first assembly stage for joining fuselage sections. First, the preassembled intermediate coupling assembly with the mounting frame MF, the crossbeam CB and the interface frame IF is moved towards a first fuselage section FS1. The first fuselage section FS1 may for example comprise fuselage mounting structures FM which allow the fuselage section FS1 to be suspended in air with a hoist, a crane or a similar processing monument. The fuselage mounting structures FM may in particular be arranged at the outer shell wall of the fuselage section FS1.

During production of the necessary longitudinal seam connections between the individual shell segments during the prefabrication of the fuselage sections, the longitudinal seams LN1 may at first not be completely riveted through in previously defined positions in the region of the transverse joints at one end of the fuselage section FS1 over a length which generally corresponds to at least one division of a former. This portion which is not completely riveted through in the region of the end of the respective longitudinal seam LN1 has previously been used to compensate any tolerances of the first fuselage section FS1 when joining it together with a second fuselage section, due to retaining the possibility of a slight widening. The fuselage section FS1 thus still has some flexibility which is obtained due to the longitudinal seams LN1 which are not completely riveted through at the end, on the side to be joined of the fuselage section.

Hitherto, being able to compensate for tolerances has been necessary since the fuselage sections which are to be joined together have large spatial dimensions and, due to unavoidable manufacturing tolerances, only have exactly the same diameter in exceptional cases. However, when using the intermediate coupling assembly as shown in Figs. 1 and 2, the longitudinal seams LN1 may be completely riveted through after joining with the intermediate coupling assembly. This is particularly advantageous since the intermediate coupling assembly is pre-fabricated within very precise tolerances by design. Therefore, the intermediate coupling assembly will form the new transverse joint portion of the first fuselage section FS1 so that any second fuselage section joined thereto will no longer need to compensate for any tolerances in the first fuselage section FS1.

To join the intermediate coupling assembly with the first fuselage section FS1, the mounting device 10 further comprises a mounting device carrier MC which is releasably coupled to the planar mounting frame MF. The mounting device carrier MC may specifically include mobility conferring equipment, such as rollers or rail-guide means. This equipment - exemplarily depicted as wheels in Fig. 3 - are configured to move the mounting device carrier MC with the planar mounting frame MF and the at least one mounting beam MB; MB' substantially suspended in air towards the suspended first fuselage section FS1.

Fig. 4 schematically illustrates an isometric view of the intermediate coupling assembly mounted on the mounting device 10 of Fig. 1 in proximity to the first fuselage section FS1. The mounting beam(s) of which only the mounting beam MB is explicitly depicted for reasons of lucidity are first attached to a mounting attachment beam MB1 installed in the first fuselage section FS1. The mounting device 10 with the mounting frame MF is then temporarily fastened to the mounting attachment beam MB1 which may for example be a seat rail of a floor grid in the first fuselage section FS1. This measure keeps the mounting frame MF and therefore the intermediate coupling assembly in rigid and mechanically secured alignment with the first fuselage section FS1 for riveting.

When the intermediate coupling assembly is fixedly connected to the first fuselage section FS1 at the transverse joint portion, the mounting device 10 may be disengaged from the intermediate coupling assembly, for example by removing the fixation bolts FB and the preliminary tacks PT and by replacing them with respective permanent rivets or bolts. Additionally, the longitudinal seams LN1 of the first fuselage section FS1 may be completely riveted through, since the intermediate coupling assembly will establish close tolerance at the transverse joint portion.

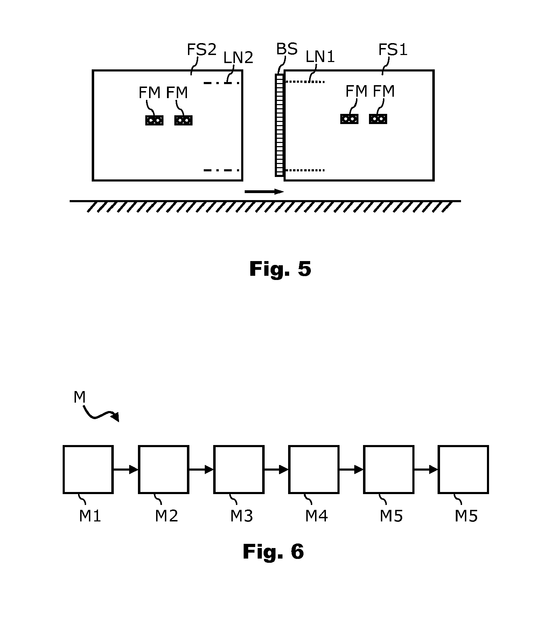

Fig. 5 schematically illustrates the movement of a second fuselage section FS2 to be joined with the first fuselage section FS1 at the transverse joint portion. The buttstrap BS is forming an extension of the outer fuselage shell of the first fuselage section FS1 so that an inner wall of the outer shell of the second fuselage section FS2 may be riveted to the buttstrap BS. The second fuselage section FS2 may also comprise fuselage mounting structures FM for suspending the second fuselage section FS2 in air, such as by hoist or crane. The longitudinal seams LN2 of the second fuselage section FS2 are not completely riveted through to allow for widening or "breathing" of the second fuselage section FS2 with respect to the first fuselage section FS1. However, since the buttstrap BS is by way of design within very close tolerance, the longitudinal seams LN2 will only have to compensate for tolerances within the second fuselage section FS2 itself, but not for tolerances in the first fuselage section FS1 the longitudinal seams LN1 of which may have already been completely riveted through. This facilitates efficient and shimless attachment of the second fuselage section FS to the first fuselage section FS1 by a lot.

Fig. 6 schematically illustrates a block diagram of a method M for joining two fuselage sections of aircraft or spacecraft. The method M may in particular employ a mounting device 10 as depicted and explained in conjunction with Fig. 1 to 4. The processing stages of the method M may be performed as explained in conjunction with the stages as shown in conjunction with Figs. 1 to 5.

The method M comprises at M1 fastening a crossbeam CB to an elliptical interface frame IF to form an intermediate coupling assembly. At M2, the intermediate coupling assembly is temporarily fastened to a planar mounting frame MF at a number of fixation holes H formed in the planar mounting frame MF. Thereafter, at M3, a buttstrap BS is temporarily fastened circumferentially around the interface frame IF. To fasten the buttstrap BS to the interface frame IF, the interface frame IF may have an outer frame member IF2 which has a fastening flange for fastening the buttstrap BS. The buttstrap BS may for example be tack riveted circumferentially around the interface frame IF and in particular the fastening flange of the outer frame member IF2.

By moving the planar mounting frame MF together with the intermediate coupling assembly, for example on a mounting device carrier MC, the intermediate coupling assembly may be placed near the fuselage section FS1 to be joined with. The mounting device with the mounting frame MF may be temporarily fastened to a mounting attachment beam MB1 of the first fuselage section FS1, such as a seat rail of a floor grid in the first fuselage section FS1, in order to keep the mounting frame in rigid and mechanically secured alignment with the first fuselage section FS1 for riveting.

At M4 of the method M, the intermediate coupling assembly and the buttstrap BS are then permanently joined to the first fuselage section FS1, for example by riveting the buttstrap BS to an inner wall of the shell of the first fuselage section FS1. The intermediate coupling assembly may afterwards at M5 be disengaged from the mounting frame MF. Finally, second fuselage section FS2 may be moved towards and aligned with the first fuselage section FS1 so that at M6 the second fuselage section FS2 may be permanently joined to the first fuselage section FS1 at the buttstrap BS, for example by riveting the buttstrap BS to an inner wall of the shell of the second fuselage section FS2.

In order to simplify the joining procedure, longitudinal seams LN1 in the first fuselage section FS1 near the transverse joint with the second fuselage section FS2 may be completely riveted through right after permanently attaching the intermediate coupling assembly and the buttstrap BS to the first fuselage section FS1. This may be done since the tolerance to be factored in when joining the second fuselage section FS2 to the first fuselage section FS1 is already compensated for by the precise pre-manufacturing of the intermediate coupling assembly which represents the outer portion of the transverse joint for the second fuselage section FS2 with the first fuselage section FS1. This facilitates riveting through the longitudinal seams LN2 of the second fuselage section FS2 because any remaining tolerances of the longitudinal seams LN1 of the first fuselage section FS2 are already compensated for by the mere presence of the intermediate coupling assembly.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

### List of reference signs

- 10: Mounting device
- BF: Fixation bolt
- BS: Buttstrap
- C: Center point
- CB: Crossbeam
- FM: Fuselage mounting structure
- FS1: Fuselage section
- FS2: Fuselage section
- H: Fixation hole
- IF: Interface frame
- IF1: Interface frame portion
- IF2: Interface frame portion
- LN1: Longitudinal seam
- LN2: Longitudinal seam
- M: Method
- M1: Method step
- M2: Method step
- M3: Method step
- M4: Method step
- M5: Method step
- MB: Mounting beam
- MB': Mounting beam
- MB1: Mounting attachment beam
- MC: Mounting device carrier
- MF: Mounting frame
- MP: Mounting beam attachment structure
- PT: Preliminary tacking

## Claims

1. Mounting device (10) for mounting an interface frame (IF) to a fuselage section (FS1), the mounting device comprising:
a planar mounting frame (MF) having a number of fixation holes (H) formed therein, the mounting frame (MF) configured to be attached to an interface frame (IF) and a crossbeam (CB) of an intermediate coupling assembly; and
at least one mounting beam (MB; MB') extending substantially perpendicularly to the plane of extension of the mounting frame (MF), the at least one mounting beam (MB; MB') comprising a plurality of mounting beam attachment structures (MP) for attaching the mounting device (10) to a mounting attachment beam (MB1) of the fuselage section (FS1).

2. Mounting device (10) according to claim 1, wherein the planar mounting frame (MF) comprises a rectangular or elliptical framework structure, and wherein the at least one mounting beam (MB; MB') is attached to the rectangular or elliptical framework structure.

3. Mounting device (10) according to one of the claims 1 and 2, further comprising:
a mounting device carrier (MC) releasably coupled to the planar mounting frame (MF), the mounting device carrier (MC) comprising mobility conferring equipment configured to move the mounting device carrier (MC) with the planar mounting frame (MF) and the at least one mounting beam (MB; MB') substantially suspended in air.

4. Method (M) for joining two fuselage sections (FS1, FS2) of aircraft or spacecraft, comprising:
fastening (M1) a crossbeam (CB) to an elliptical interface frame (IF) to form an intermediate coupling assembly;
temporarily fastening (M2) the intermediate coupling assembly to a planar mounting frame (MF) at a number of fixation holes (H) formed in the planar mounting frame (MF);
temporarily fastening (M3) a buttstrap (BS) circumferentially around the interface frame (IF);
permanently attaching (M4) the intermediate coupling assembly and the buttstrap (BS) to a first fuselage section (FS1);
disengaging (M5) the intermediate coupling assembly from the mounting frame (MF); and
permanently attaching (M6) a second fuselage section (FS2) to the first fuselage section (FS1) at the buttstrap (BS).

5. Method (M) according to claim 4, wherein the interface frame (IF) comprises an outer frame member (IF2) having a fastening flange for fastening the buttstrap (BS).

6. Method (M) according to one of the claims 4 and 5, further comprising:
temporarily fastening the mounting frame (MF) to a mounting attachment beam (MB1) of the first fuselage section (FS1).

7. Method (M) according to claim 6, wherein the mounting attachment beam (MB1) of the fuselage section (FS1) comprises a seat rail of a floor grid in the first fuselage section (FS1).

8. Method (M) according to one of the claims 4 to 7, wherein temporarily fastening (M3) the buttstrap (BS) comprises tack riveting the buttstrap (BS) circumferentially around the interface frame (IF).

9. Method (M) according to one of the claims 4 to 8, wherein permanently attaching (M4) the intermediate coupling assembly and the buttstrap (BS) to the first fuselage section (FS1) comprises riveting the buttstrap (BS) to an inner wall of the shell of the first fuselage section (FS1).

10. Method (M) according to claim 9, wherein permanently attaching (M6) the second fuselage section (FS2) to the first fuselage section (FS1) comprises riveting the buttstrap (BS) to an inner wall of the shell of the second fuselage section (FS2).

11. Method (M) according to one of the claims 4 to 10, wherein, after permanently attaching (M4) the intermediate coupling assembly and the buttstrap (BS) to the first fuselage section (FS1), longitudinal seams (LN1) in the first fuselage section (FS1) are completely riveted through.
